# EUROPÄISCHE PATENTANMELDUNG

(11) **EP 3 613 505 A1**
(43) Veröffentlichungstag der Anmeldung: **26.02.2020**
(21) Anmeldenummer: 18190701.5
(22) Anmeldetag: 24.08.2018
(51) Int. Cl.: B01J 35/04, B01J 37/00, B33Y 10/00, B33Y 30/00, B33Y 40/00, B29C 64/10, B29C 64/106, B29C 64/171, B29C 64/209, B29C 64/245, B29C 64/227

(54) **VERFAHREN ZUR MIKROEXTRUSION VON FORMKÖRPERN DURCH MEHRERE MIKROEXTRUSIONSDÜSEN**

(71) Anmelder: BASF SE, 67056 Ludwigshafen am Rhein (DE)
(72) Erfinder: KENNEMA, Marco Oskar, 67056 Ludwigshafen (DE); WALSDORFF, Christian, 67056 Ludwigshafen (DE)
(74) Vertreter: Schuck, Alexander

(57) **Zusammenfassung**

Verfahren zur Herstellung von Formkörpern von Katalysatoren, Katalysatorträgern oder Adsorbentien durch Mikroextrusion, bei dem eine pastöse Extrusionsmasse eines Formkörper-Vorläufermaterials durch eine bewegliche Mikroextrusionsdüse extrudiert und durch Bewegung der Mikroextrusionsdüse ein Formkörper-Vorläufer schichtweise aufgebaut wird und der Formkörper-Vorläufer anschließend einer thermischen Behandlung unterworfen wird, dadurch gekennzeichnet, dass zum Aufbau jeweils eines Formkörper-Vorläufers die pastöse Extrusionsmasse gleichzeitig durch mehrere Mikroextrusionsdüsen extrudiert wird. Die Mikroextrusionsdüsen werden bevorzugt in einer Reihe in einem Extrusionskopf angeordnet. Die Extrusionskopf kann horizontal um 90° drehbar sein. Ferner kann der schichtweise Aufbau von Formkörper-Vorläufern durch mindestens zwei Extrusionsköpfe erfolgen, die in zueinander senkrechten Raumrichtungen bewegt werden.

## Beschreibung

Die Erfindung betrifft ein Verfahren zur Herstellung von Katalysator- und Katalysatorträger- oder Adsorbens-Formkörpern durch Mikroextrusion, wobei ein Formkörper durch mehrere Mikroextrusionsdüsen aufgebaut wird. Verfahren zur additiven Fertigung von chemischen Katalysatoren mittels Mikroextrusion werden auch als "Robocasting" oder "Direct-Ink-Writing" (DIM) bezeichnet.

In vielen Prozessen werden chemische Katalysatoren in Form von Formkörpern eingesetzt. Solche Formkörper haben oft die Form von Zylindern, Hohlzylindern oder Kugeln. Auch Formkörper mit beispielsweise trilobalen oder sternförmigen Querschnitten oder mit mehreren hohlzylindrischen Öffnungen werden verwendet. Solche Formkörper werden durch Extrusion, Tablettierungen oder im Fall von Kugeln auch durch Agglomerisation auf drehenden Tellern hergestellt.

Allerdings sind die topologischen Freiheitsgrade von Formkörpern, die mit solchen klassischen Methoden hergestellt werden können, in der Regel beschränkt.

EP 1127618 A1 beschreibt durch Tablettierung hergestellte Hohlzylinder mit abgerundeten Stirnflächen. DE 102 26 729 A1 beschreibt durch Extrusion hergestellte Zylinder mit Einkerbungen parallel zur Extrusionsrichtung. WO 2016/156042 A1 beschreibt durch Extrusion hergestellte Formkörper mit vier parallelen hohlzylindrischen Öffnungen.

Eine größere Vielfalt von Formkörpertopologien lässt sich mittels additiver Fertigungsverfahren herstellen, die oft auch als 3D-Druck-Verfahren bezeichnet werden.

Unter dem Oberbegriff additive Fertigungsverfahren werden eine Reihe unterschiedlicher Verfahren zusammengefasst. Ihnen gemeinsam ist, dass ein dreidimensionaler Formkörper additiv, also durch sukzessives Hinzufügen von Material, aufgebaut wird.

Für die Herstellung chemischer Katalysatoren wurden insbesondere zwei Arten additiver Fertigungsverfahren beschrieben.

US 8,119,554 beschreibt einen sogenannten Pulverbett-Druckprozess zur Herstellung chemischer Katalysatoren. US 9,278,338 beschreibt ebenfalls einen sogenannten Pulverbett-Druckprozess zur Herstellung chemischer Katalysatoren. In beiden Schriften werden auch Katalysatorformkörper mit Geometrien beschrieben, die mittels klassischer Tablettier- oder Extrusionsprozesse nicht zugänglich wären. Auch WO 2016/166526 und WO 2016/166523 beschreiben die Herstellung von Katalysatorformkörpern mit Geometrien, die mittels klassischer Tablettier- oder Extrusionsprozesse nicht zugänglich wären.

Allerdings sind Pulverdruck-Verfahren nur begrenzt zur Herstellung chemischer Katalysatoren geeignet. Es ergeben sich beispielsweise Schwierigkeiten, wenn Bestandteile des Pulvers mit dem flüssigen Klebemittel reagieren oder darin löslich sind. Auch müssen die so erhaltenen Formkörper in der Regel bei hohen Temperaturen kalziniert werden, um eine ausreichende mechanische Stabilität zu erreichen, wodurch die katalytischen Eigenschaften stark beeinflusst werden können. Auch die spezifische Dichte und damit auch die in einem Volumenelement zur Verfügung stehende Aktivmasse sind oftmals gering.

C.R. Tubio et al. beschreiben in Journal of Catalysis 334 (2016) 110 bis 115 die Herstellung eines chemischen Katalysatorformkörpers mittels eines Robocasting-Verfahrens. Der dabei erhaltene Katalysatorformkörper mit einer von den Autoren als "wood-pile" (Holzstapel) bezeichneten Struktur wäre ebenfalls mit klassischen Extrusions- und Tablettierverfahren nicht zugänglich. Ein Vorteil solcher Robocasting-Methoden ist, dass die Ausgangsmaterialien ähnlich wie in klassischen Extrusionsprozessen behandelt werden, was eine relativ breite Anwendbarkeit der Methoden mit sich bringt.

Die 3D-Mikroextrusionstechnik (3D-Robocasting-Technik) wird beispielsweise in US 7,527,671, US 6,027,326, US 6,401,795, Catalysis Today 273 (2016), Seiten 234 bis 243, Journal of Catalysis 334 (2016), Seiten 110 bis 115 oder US 6,993,406 beschrieben.

Katalysatorformkörper können einzeln oder in geringer Stückzahl, beispielsweise in Form von Monolithen wie in Autoabgaskatalysatoren, eingesetzt werden. In Prozessen zur Herstellung von Chemikalien werden Katalysatorformkörper regelmäßig nicht einzeln, sondern in Form von Schüttungen, sogenannten Katalysatorbetten, eingesetzt.

Formkörper mit Geometrien, wie sie durch additive Fertigungstechniken zugänglich sind, können für chemische Katalysatoren gegenüber klassischen Geometrien, wie sie durch Tablettierung oder Extrusion zugänglich sind, verschiedene Vorteile haben. Insbesondere können Formkörper mit makroskopischen Kanalstrukturen eine relativ hohe geometrische Oberfläche pro Katalysatorbett-Volumen bei relativ niedrigem Druckverlust aufweisen.

Additive Fertigungsverfahren werden oftmals auch als "rapid prototyping" bezeichnet. Sie wurden also oftmals entwickelt, um typischerweise als Einzelstück oder in kleiner Auflage Prototypen bestimmter Formkörper herstellen zu können. Chemische Katalysatorformkörper für den Einsatz in kommerziellen Reaktoren werden aber regelmäßig in einem Maßstab von mehreren Tonnen bis zu mehreren hundert Tonnen für die Befüllung einer einzigen Reaktorstraße benötigt. Dies entspricht Millionen von Formkörpern.

In Verfahren zur Mikroextrusion von Katalysatoren und Katalysatorträgern nach dem Stand der Technik werden die Formkörper des Katalysators oder Katalysatorträgers jeweils durch Extrusion einer entsprechenden Masse aus einem Extrusionskopf hergestellt, wobei der Extrusionskopf in der Regel in drei Raumrichtungen bewegt wird und eine einzige Öffnung zur Extrusion jeweils nur eines einzelnen Strangs aufweist.

Ein solcher Extrusionskopf nach dem Stand der Technik mit nur einer einzigen Öffnung zur Extrusion erlaubt zwar den Aufbau sehr individuell dimensionierter Formkörper (rapid prototyping), ist allerdings für die Massenproduktion einer Vielzahl von gleichen Formkörpern wenig geeignet. Für den Aufbau jeder einzelnen Schicht eines nach dem Stand der Technik durch Mikroextrusion hergestellten Formkörpers eines Katalysators oder Katalysatorträgers sind in der Regel viele sehr akkurate und bevorzugt schnelle und ruckartige Richtungsänderungen der Bewegung des Extrusionskopfes erforderlich. Dies ist insbesondere bei einer Massenproduktion von Katalysatoren oder Katalysatorträgern störend, da es dabei in der Regel nicht um die Möglichkeit geht, einzelne Formkörper individuell zu dimensionieren, sondern standardisierte Formkörper in großer Stückzahl mit hoher Zuverlässigkeit möglichst störungsfrei herzustellen.

Aufgabe der vorliegenden Erfindung ist es also, ein Verfahren zu finden, mit dem sich Katalysatoren oder Katalysatorträger als Formkörper in großer Stückzahl günstig herstellen lassen.

Gelöst wird die Aufgabe durch ein Verfahren zur Herstellung von Formkörpern von Katalysatoren, Katalysatorträgern oder Adsorbentien durch Mikroextrusion, bei dem eine pastöse Extrusionsmasse eines Formkörper-Vorläufermaterials durch eine bewegliche Mikroextrusionsdüse extrudiert und durch Bewegung der Mikroextrusionsdüse ein Formkörper-Vorläufer schichtweise aufgebaut wird und der Formkörper-Vorläufer anschließend einer thermischen Behandlung unterworfen wird, dadurch gekennzeichnet, dass zum Aufbau jeweils eines Formkörper-Vorläufers die pastöse Extrusionsmasse gleichzeitig durch mehrere Mikroextrusionsdüsen extrudiert wird.

Die so hergestellten Formkörper können nur das Trägermaterial, das Trägermaterial und eine oder mehrere Aktivkomponenten oder nur Aktivkomponenten enthalten, abhängig von der Art der eingesetzten extrudierbaren Formulierung. Vorzugsweise werden durch Mikroextrusion und Aneinanderfügen von diskontinuierlichen Strängen makroskopisch poröse Katalysatorformkörper, Katalysatorträgerformkörper oder Adsorbens-Formkörper hergestellt.

Im Allgemeinen sind mehrere Mikroextrusionsdüsen, die gemeinsam von einem Strom der Extrusionsmasse gespeist werden, in einer Reihe nebeneinander in einem Extrusionskopf angeordnet und werden mit diesem gemeinsam bewegt. Den oben beschriebenen Nachteilen wird also durch das erfindungsgemäße Verfahren dadurch abgeholfen, dass ein Extrusionskopf mehrere Öffnungen zur Mikroextrusion von Strängen für den Aufbau von mikroextrudierten Formkörpern aufweist.

Die Erfindung wird durch die Figuren 1 bis 4 näher erläutert.
Figur 1 zeigt schematisch einen Extrusionskopf mit mehreren Mikroextrusionsdüsen und durch diese gleichzeitig extrudierte, parallele Stränge aus Extrusionsmasse.
Figur 2 zeigt schematisch eine Anordnung von zwei Extrusionsköpfen mit jeweils mehreren Mikroextrusionsdüsen, die senkrecht zueinander angeordnet sind und bewegt werden, und die dabei extrudierten Schichten von Strängen aus Extrusionsmasse.
Figur 3 zeigt schematisch eine Anordnung von Einheiten aus mehreren mechanisch fest miteinander verbundenen Extrusionsköpfen, wobei die Einheiten senkrecht zueinander angeordnet sind und bewegt werden, und die dabei erzeugte Mehrzahl von im Aufbau befindlichen Formkörper-Vorläufern aus Schichten extrudierter Stränge.
Figur 4 zeigt schematisch das Ausstanzen von zylinderförmigen, ringförmigen oder multilobalen Strukturen aus einer durch Mikroextrusion erzeugten quaderförmigen "wood-pile"-Struktur.

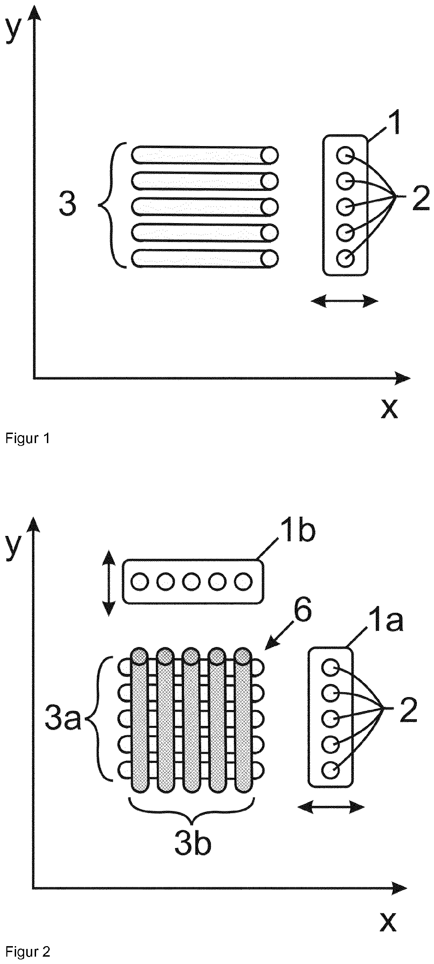

Bevorzugt sind die Öffnungen (Mikroextrusionsdüsen) eines Extrusionskopfes so in einer Reihe angeordnet, dass bei einer Bewegung des Extrusionskopfes senkrecht zur Ausrichtung dieser Reihe die mikroextrudierten Stränge in paralleler Anordnung ausgeformt werden, bevorzugt so, dass sie sich dabei nicht berühren. Ein solcher Extrusionskopf ist in Figur 1 schematisch dargestellt. Dabei erzeugen mehrere in einem Extrusionskopf 1 angeordnete Mikroextrusionsdüsen 2 gleichzeitig eine Lage 3 mehrerer paralleler Stränge.

Bei einer bevorzugten Ausführungsform des erfindungsgemäßen Verfahrens sind mindestens zwei Extrusionsköpfe am Aufbau der einzelnen Formkörper beteiligt. Ein solches Verfahren wird in Figur 2 beispielhaft illustriert. Dabei sind mindestens zwei Extrusionsköpfe **1a** und **1b** so angeordnet, dass sie während des Extrusionsvorgangs stufenweise vertikal bewegt und horizontal, also in der Ebene des schichtweisen Aufbaus der Formkörper-Vorläufer, jeweils nur entweder in x-Richtung oder in y-Richtung bewegt werden. Dazu werden sie beim sukzessiven schichtweisen Aufbau eines Formkörpers aus Lagen 3a und 3b von mikroextrudierten Strängen abwechselnd über einen im Aufbau befindlichen Formkörper geführt. Insbesondere können auch eine Vielzahl von Formkörper-Vorläufern gleichzeitig aufgebaut werden, wobei die beiden Extrusionsköpfe 1a und 1b abwechselnd jeweils über eine Vielzahl von im Aufbau befindlichen Formkörper-Vorläufern geführt werden.

In dieser Ausführungsform des erfindungsgemäßen Verfahrens erfolgt der schichtweise Aufbau von Formkörper-Vorläufern durch mindestens zwei Extrusionsköpfe, die in zueinander senkrechten Raumrichtungen bewegt werden.

In einer bevorzugten Ausführungsform werden dabei von Extrusionsköpfen, die sich in x- bzw. y-Richtung bewegen, jeweils mehrere Formkörper-Vorläufer schichtweise aufgebaut.

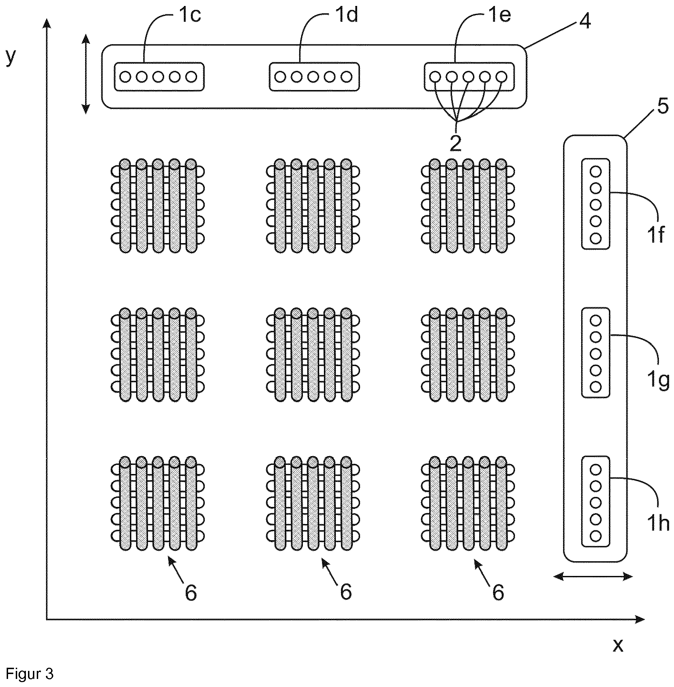

Bei dem erfindungsgemäßen Verfahren können auch mehrere Extrusionsköpfe mechanisch fest so kombiniert werden, dass sie jeweils synchron in x- bzw. y-Richtung geführt werden können. Dies ist in Figur 3 schematisch dargestellt. Dabei sind Extrusionsköpfe 1a, 1b und 1c zu einer in y-Richtung beweglichen Einheit 4 und Extrusionsköpfe 1d, 1e und 1f zu einer x-Richtung beweglichen Einheit 5 fest mechanisch verbunden.

In dieser Ausführungsform des erfindungsgemäßen Verfahrens sind mehrere Extrusionsköpfe mechanisch gekoppelt und werden gemeinsam bewegt.

In einer weiteren Ausführungsform des erfindungsgemäßen Verfahrens können die erfindungsgemäßen Extrusionsköpfe mit mehreren Mikroextrusionsdüsen auch drehbar ausgelegt sein. Beispielsweise können sie um einen bestimmten Winkel, beispielsweise um 90° drehbar sein und nach der Extrusion einer jeden Lage von parallelen mikroextrudierten Strängen beim Aufbau eines Formkörpers um diesen Winkel, beispielsweise 90° in einer Ebene parallel zur Ebene, in der die Stränge mikroextrudiert werden, gedreht werden.

In einer bevorzugten Ausführungsform des erfindungsgemäßen Verfahrens wird zum schichtweisen Aufbau von Formkörper-Vorläufern der Extrusionskopf horizontal um 90° gedreht und in zueinander senkrechten Raumrichtungen bewegt.

Dabei können auch eine Mehrzahl von Extrusionsköpfen, die mechanisch miteinander fest verbunden sind, um einen Winkel, beispielsweise um 90° gedreht ausgerichtet werden, indem die ganze Einheit von fest verbundenen Extrusionsköpfen gedreht wird. In dieser Ausführungsform des erfindungsgemäßen Verfahrens sind also ebenfalls mehrere Extrusionsköpfe fest mechanisch gekoppelt und werden gemeinsam bewegt.

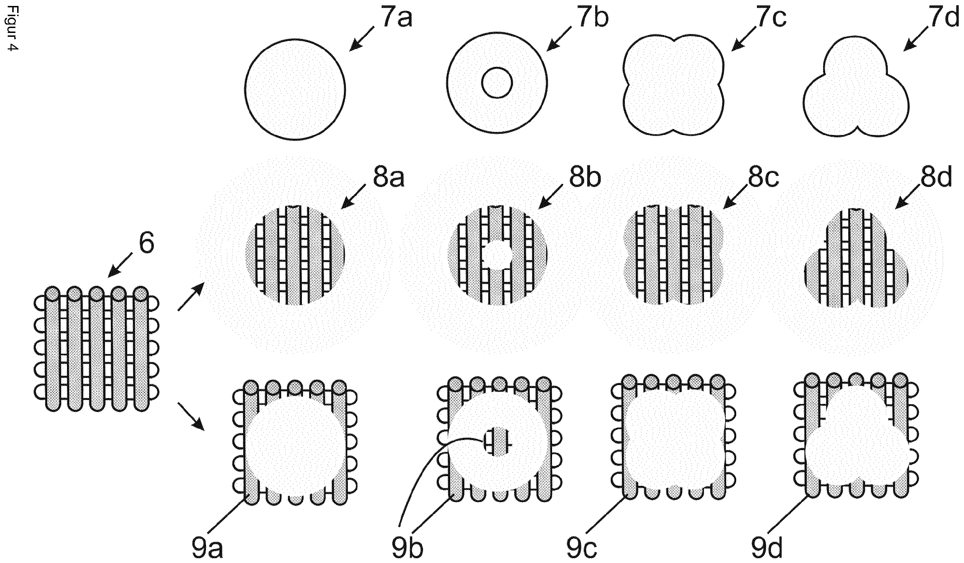

Mit dem erfindungsgemäßen Verfahren können Formkörper mit unterschiedlicher Geometrie der äußeren Kontur ausgeformt werden. Eine hinsichtlich Porosität und Stofftransporteigenschaften vorteilhafte Geometrie zeigen beispielsweise sogenannte "wood-pile"-("Holzstapel")-artigen Strukturen mit einer quaderförmigen Kontur. Allerdings sind Katalysatoren oder Katalysatorträger mit einer quaderförmigen Kontur-Geometrie hinsichtlich ihrer Packungseigenschaften für den Einsatz in Schüttungen solcher Katalysatorformkörper nicht immer vorteilhaft. Hier kann es vorteilhaft sein, wie schematisch in Figur 4 dargestellt, aus quaderförmigen "wood-pile"-Strukturen 6 beispielsweise mittels eines Stanzwerkzeugen 7a, 7b, 7c oder 7d zylinderförmige Strukturen 8a, ringförmige Strukturen 8b oder multilobale Strukturen 8c oder 8d auszustanzen. Die dabei anfallenden Reststücke 9a, 9b, 9c bzw. 9d werden vorteilhaft ggf. nach einem Mahlschritt in den Produktionsprozess zurückgeführt.

Im Allgemeinen haben die Mikroextrusionsdüsen einen Durchmesser von weniger als 5 mm, vorzugsweise von weniger als 4 mm, besonders bevorzugt von 0,05 bis 3 mm, insbesondere von 0,2 bis 2 mm.

Die geometrische Auflösung von nach dem erfindungsgemäßen Verfahren hergestellten Formkörpern wird naturgemäß durch den Durchmesser der Mikroextrusionsdüsen definiert. Bevorzugt werden nach dem erfindungsgemäßen Verfahren Formkörper mit einem minimalen Durchmesser von mindestens 3 mm, besonders bevorzugt von mindestens 5 mm und insbesondere von mindestens 10 mm hergestellt.

Die maximale Größe der erfindungsgemäß hergestellten Formkörper wird im wesentlich durch die Abmessungen der erfindungsgemäßen Plattform und etwaiger Einhausungen sowie den Bewegungsbereich der Mikroextrusionsköpfe definiert. Der maximale Durchmesser der erfindungsgemäß hergestellten Katalysatoren beträgt vorzugsweise maximal 1 m, besonders bevorzug maximal 30 cm und insbesondere maximal 10 cm.

Abmessungen größer als 10 cm kommen insbesondere bei monolithischen Formkörpern in Betracht, die in der Regel sehr genau in einen Apparat zur Durchführung katalytischer Reaktionen eingepasst werden. Beispiele für solche Anwendungen finden sich bei vielen Verfahren zur Abgasbehandlung.

Abmessungen von maximal 10 cm, bevorzugt von maximal 5 cm und insbesondere von maximal 3 cm kommen insbesondere bei Formkörpern in Betracht, die in einem Apparat zur Durchführung katalytischer Reaktionen nicht einzeln eingepasst werden, sondern als sogenannte Schüttung in einem Katalysatorbett zum Einsatz kommen. Beispiele für solche Apparate sind adiabate oder isotherme Reaktoren oder beliebige Zwischenformen, insbesondere in Form von Rohrbündel-, Platten-, Schütt- oder Hordenreaktoren. Beispiele für solche Verfahren finden sich bei vielen Prozessen der chemischen Industrie zur Herstellung von chemischen Verbindungen.

Durch Trocknung oder weitere thermische Behandlung kann auch ein Schrumpfen der erfindungsgemäß hergestellten Katalysatorformkörper eintreten, das bei der Dimensionierung der Mikroextrusionsdüsen und der frisch mikroextrudierten ("grünen") Formkörper gegebenenfalls zu berücksichtigen ist.

Als Extrusionsmassen sind prinzipiell Formulierungen geeignet, die auch in Standard-Extrusionsverfahren eingesetzt werden. Voraussetzung ist, dass die Partikelgröße des Katalysatorvorläufermaterials hinreichend klein für die Mikroextrusionsdüse ist. Die größten Partikel (d99-Wert) sollten vorzugsweise mindestens fünfmal kleiner, insbesondere mindestens zehnmal kleiner als der Düsendurchmesser sein.

Geeignete Formulierungen sind pastöse Suspensionen, welche die für die Mikroextrusion erforderlichen rheologischen Eigenschaften aufweisen. In der oben genannten Literatur wird im Einzelnen beschrieben, wie geeignete rheologische Eigenschaften eingestellt werden können. Falls erforderlich, können den Formulierungen Bindemittel und viskositätsmodifizierende Zusätze wie Stärke oder Carboxymethylcellulose zugesetzt werden.

Vorzugsweise enthält die mikroextrudierbare, pastöse Suspension Wasser als flüssiges Verdünnungsmittel, es können aber auch organische Lösungsmittel eingesetzt werden. Die Suspension kann neben katalytisch aktiven Massen oder Vorläuferverbindungen für katalytisch aktive Massen auch ein anorganisches Träger- oder Inertmaterial enthalten. Beispiele für häufig verwendete Träger- oder Inertmaterialien sind Silziumdioxid, Aluminiumoxid, Diatomeenerde, Titandioxid, Zirkoniumdioxid, Magnesiumoxid, Calciumoxid, Hydrotalcite, Spinelle, Perovskite, Metallphosphate, Metallsilicate, Zeolithe, Steatite, Cordierite, Carbide und deren Gemische.

Mit dem erfindungsgemäßen Verfahren können auch Formkörper hergestellt werden, die im Wesentlichen nur ein Trägermaterial oder ein Inertmaterial enthalten. Solche nach dem erfindungsgemäßen Verfahren hergestellten Formkörper können dann in weiteren Verfahrensschritten, beispielsweise durch Tränkung oder Beschichtung und gegebenenfalls weitere thermische Behandlungsschritte, in Katalysatorformkörper umgewandelt werden.

Die geometrische Auflösung von nach dem erfindungsgemäßen Verfahren hergestellten Formkörpern wird naturgemäß durch den Durchmesser der Mikroextrusionsdüsen definiert. Bevorzugt werden nach dem erfindungsgemäße Verfahren Formkörper mit einem minimalen Durchmesser von mindestens 3 mm, besonders bevorzugt von mindestens 5 mm und insbesondere von mindestens 10 mm hergestellt.

Beispiele für den Einsatz des erfindungsgemäßen Verfahrens können monolithische Formkörper zur Behandlung von Abgasen, beispielsweise Stickoxiden oder Lachgas sein.

Beispiele für den Einsatz des erfindungsgemäßen Verfahren können auch Formkörper sein, die typischerweise als Schüttung in einem Katalysatorbett eingesetzt werden, beispielsweise in Verfahren zur Herstellung von Synthesegas, zur Oxidation von Schwefeldioxid zu Schwefeltrioxid oder zur Oxidation von Ethylen zu Ethylenoxid.

Geeignete extrudierbare Formulierungen zur Herstellung von Katalysatoren für die Oxidation von SO₂ zu SO₃ sind beispielsweise in WO 2016/156042 A1 beschrieben, siehe insbesondere Beispiel 1 der WO 2016/156042 A1. In einer Ausführungsform wird das erfindungsgemäße Verfahren zur Herstellung von Katalysatorformkörpern für die Oxidation von SO₂ zu SO₃ eingesetzt.

Vorzugsweise werden die Formkörper-Vorläufer auf einer beweglichen Unterlage (Plattform) aufgebaut. Die Plattform kann dabei kontinuierlich oder diskontinuierlich relativ zu den Mikroextrusionsdüsen und Extrusionsköpfen bewegt werden.

In einer Ausführungsform der Erfindung wird die Plattform nach der schichtweisen Erzeugung einer Mehrzahl von Formkörper-Vorläufern diskontinuierlich bewegt. Beispielsweise kann die Plattform nach dem Robocasting einer Mehrzahl von Formkörpern so weit in Vorwärts-richtung verfahren werden, dass für den nächsten Robocasting-Schritt wieder ein freier Bereich der Plattform zur Verfügung steht.

In einer bevorzugten Ausführungsform der Erfindung wird die Plattform während der schichtweisen Erzeugung der Formkörper jedoch kontinuierlich bewegt, wobei durch die Bewegung der Mikrodüsen die Bewegung der Plattform kompensiert wird. Dazu ist die elektro-nische Steuerung der Mikroextrusionsdüsen bzw. der Extrusionsköpfe in den drei Raumrichtungen so ausgestaltet, dass die Translationsbewegung der Plattform durch eine zusätzliche Translationsbewegung der Mikroextrusionsdüsen bzw. der Extrusionsköpfe kompensiert wird. Eine solche steuerungstechnische Kompensation durch vektorielle Bewegungsanteile, die die Bewegung der Plattform kompensieren, ist dem Fachmann geläufig.

Die geometrische Auflösung (Genauigkeit) der mit dem erfindungsgemäßen Verfahren hergestellten Formkörper wird auch von der Genauigkeit der Bewegung und Positionierung von Mikroextrusionsdüsen bzw. Extrusionsköpfen und Plattform, insbesondere auch von der Genauigkeit der Relativbewegung zwischen Mikroextrusionsdüsen bzw. Extrusionsköpfen und Plattform, definiert. Eine Abschätzung der für eine angestrebte Auflösung der erfindungsgemäßen Formkörper erforderlichen Genauigkeit der Bewegung und Positionierung von Mikroextrusionsdüsen bzw. Extrusionsköpfen und Plattform ist dem Fachmann nach dem Stand der Technik unter Verwendung allgemeiner mathematischer Kenntnisse möglich.

Vorzugsweise bewegt sich die Plattform kontinuierlich oder diskontinuierlich von einem Bereich, in dem die Robocasting-Schritte durchgeführt werden, zu einem Bereich, in dem eine thermische Behandlung durchgeführt wird. In einer bevorzugten Ausführungsform ist die bewegliche Plattform ein umlaufendes Band. Das umlaufende Band kann ein kontinuierliches Band, beispielsweise ein Hartgummi-Band, sein. Bevorzugt wird ein Kettenband oder ein Plattenband aus einem metallischen Werkstoff eingesetzt. Es können beispielsweise auch keramische Werkstoffe als Plattform und Segmente einer Bandstruktur eingesetzt werden. Auch Kunststoffe, beispielsweise Teflon, können eingesetzt werden, sofern die Temperaturen der thermischen Behandlung das zulassen. Diese Bandstruktur ist vorzugsweise wie die Kette eines Raupenfahrzeugs angeordnet, so dass Segmente der Bandstruktur nach einem Umlauf wieder an ihren Ausgangspunkt zurückkehren.

In einer bevorzugten Ausführungsform werden auf dem umlaufenden Band die Formkörper einer Trocknung als thermischer Behandlung unterworfen, wobei das Band mindestens eine Trocknungszone durchläuft. Die Trocknung kann in mehreren Trocknungszonen bei unterschiedlichen Temperaturen erfolgen. Vorzugsweise weist das umlaufende Band Perforationen auf und es erfolgt eine Trocknung mittels eines erwärmten Gases, das in der mindestens einen Trocknungszone die Perforationen durchströmt. Erzeugung der Katalysatorformkörper-Vorläufer durch Mikroextrusion und thermische Behandlung derselben können aber auch auf verschiedenen umlaufenden Bändern erfolgen.

Dabei wird das Band nach Durchlaufen eines ersten Bereichs, in dem die Robocasting-Schritte durchgeführt werden, und mindestens eines zweiten Bereichs, in dem eine thermische Behandlung durchgeführt wird, so umgelenkt, dass die Formkörper herabfallen und beispielsweise in einen weiteren Verfahrensschritt geleitet werden, während das Band in umgekehrter Richtung zurückgeführt wird und nach einer abermaligen Umlenkung wieder in den Bereich, in dem die Robocasting-Schritte durchgeführt werden, geführt wird.

Die Formkörper können nach dem Verlassen der Bandstruktur einem oder mehreren weiteren Verfahrensschritten, beispielsweise einer weiteren thermischen Behandlung, insbesondere bei höheren Temperaturen, oder einem Konfektionier- oder Verpackungsschritt unterworfen werden.

Das Umlenken der erfindungsgemäßen Bandstruktur kann beispielsweise mittels Rollen, Rädern oder Zahnrädern erfolgen.

Die Plattform und Bandstruktur ist bevorzugt perforiert, also mit Durchlässen versehen, so dass ein Gasstrom vertikal durch die Bandstruktur geleitet werden kann, insbesondere um eine gleichmäßige thermische Behandlung oder Trocknung der Formkörper zu gewährleisten.

Die Plattform und Bandstruktur kann in Form eines Netzes oder Geflechts oder in Form von mit Scharnieren verbundenen Platten ausgelegt sein. Bevorzugt ist das Band oder sind die einzelnen Segmente des Bands aus einem metallischen Werkstoff ausgeführt.

Der Wärmeeintrag im thermischen Behandlungsschritt kann beispielsweise mittels Mikrowellenstrahlung, elektrischer oder dampfbeschickter Aggregate, direkter Befeuerung mit einem Brenngas oder durch Einspeisung eines vorerwärmten Gases erfolgen.

In dem erfindungsgemäßen Verfahren werden bevorzugt zumindest einzelne Bereiche der Plattform (Bandstruktur) in einer weitgehend geschlossenen oder zumindest absaugbaren Umhausung (Kammer) angeordnet. Insbesondere der thermische Behandlungsschritt wird in der Regel geschlossen wie in einem Bandtrockner oder einem Bandkalzinierer durchgeführt. Die Begriffe Bandtrockner und Bandkalzinierer können überlappen, so kann ein Bandkalzinierer ähnlich wie ein Bandtrockner aufgebaut sein, wird aber bei relativ höheren Temperaturen betrieben. Trocknungs- und weitere thermische Behandlungsschritte (Kalzinierschritte) können auch in einem gemeinsamen Apparat durchgeführt werden, der dann vorzugsweise mit einer Reihe von mehr oder weniger scharf getrennten Temperaturzonen betrieben werden kann.

Eine geeignete Bandkalzinier-Vorrichtung ist beispielsweise in EP 1 889 657 A2 beschrieben. Diese umfasst als Mittel zur Erzeugung der Gaszirkulation einen Ventilator, der in geeigneter Weise oberhalb des Förderbands in der Kammer (den Kammern) angeordnet ist. In geeigneten Ausführungsformen umfassen die Mittel zum Erzeugen der Gaszirkulation außerdem Gasleiteinrichtungen zum Leiten der Gaszirkulation innerhalb der Kammer, wobei sich die Gasleiteinrichtungen innerhalb der Kammer jeweils am Rand des Förderbands im Wesentlichen in einer Ebene senkrecht zur Auflagefläche des Förderbands erstrecken. Die Mittel zum Erzeugen der Gaszirkulation und/oder die Gasleiteinrichtungen sind zweckmäßigerweise so ausgebildet, dass das Gas durch das gasdurchlässige Förderband und die darauf befindlichen teilchenförmigen Katalysatorvorläufer aufsteigt und an den Wänden der Kammer wieder absteigt. Andererseits ist aber auch eine Gaszirkulation in umgekehrter Richtung vorstellbar. Weist die Bandkalzinier-Vorrichtung wenigstens zwei beheizbare Kammern auf, sind diese vorzugsweise so gegeneinander abgegrenzt, dass im Wesentlichen kein Gasaustausch zwischen den Kammern stattfindet. Zur Entfernung von Zersetzungsgasen und dergleichen wird vorzugsweise kontinuierlich oder periodisch ein Teil des in der Kammer umgewälzten Gases entfernt und durch Frischgas ersetzt. Die Zufuhr von Frischgas wird dabei so gesteuert, dass die Temperaturkonstanz in der Kammer nicht beeinträchtigt wird. Das Volumen des pro Zeiteinheit in der Kammer zirkulierten Gases ist in der Regel größer als das Volumen des der Kammer pro Zeiteinheit zu- oder daraus abgeführten Gases und beträgt vorzugsweise wenigstens das Fünffache davon.

Es können auch mehrere, z.B. zwei oder drei, der oben beschriebenen Bandkalzinier-Vorrichtungen nacheinander durchlaufen werden. Der Katalysatorvorläufer kann gegebenenfalls nach dem Durchlaufen einer Vorrichtung und vor dem Durchlaufen einer weiteren Vorrichtung gesammelt und zwischengelagert werden.

Auch der Bereich, in dem der Robocasting-Schritt durchgeführt wird, kann von einer absaugbaren Umhausung umgeben sein. Das ist insbesondere dann erforderlich, wenn die Katalysatormaterialien gesundheitsschädliche Stoffe enthalten oder brennbare Lösemittel bei der Herstellung der extrudierbaren Pasten eingesetzt werden. Gegebenenfalls ist bei der Verwendung von organischen Zusätzen oder anderen Stoffen, die explosionsfähige Gasatmosphären bilden können, wie beispielsweise Ammoniak, auch eine Auslegung der Umhausung und der Abgasabsaugung als Explosions-Schutzbereich geboten. Erforderlich kann auch die Behandlung der aus der Umhausung abgesaugten Abluft mittels Filtern, Wäschern, Verbrennungsanlagen oder DeNOx-Einrichtungen sein. Bei einer Absaugung der Umhausung wird vorzugsweise auch eine entsprechende Zuluft-Versorgung vorgesehen.

In einer Ausführungsform des erfindungsgemäßen Verfahrens findet auch eine kontinuierliche oder diskontinuierliche Reinigung der Plattform (Bandstruktur) von möglichen Anhaftungen statt. Dies kann beispielsweise mechanisch durch Bürsten oder mithilfe einer Reinigungsflüssigkeit, beispielsweise mittels Spritzdüsen, erfolgen. Bevorzugt wird so eine Reinigung automatisch in einem Abschnitt der Bandstruktur außerhalb des Bereichs des Robocasting- oder des thermischen Behandlungsschritts durchgeführt.

### Bezugszeichenliste

- 1, 1a, 1b, 1c, 1d, 1e, 1f, 1g: bewegliche Extrusionsköpfe
- 2: Mikroextrusionsdüsen
- 3, 3a, 3b: Lagen paralleler extrudierter Stränge
- 4, 5: bewegliche Einheiten aus mehreren mechanisch verbundenen Extrusionsköpfen
- 6: quaderförmige "wood-pile"-Struktur
- 7a, 7b, 7c, 7d: Stanzwerkzeuge
- 8a, 8b, 8c, 8d: ausgestanzte "wood-pile"-Strukturen mit der Zielgeometrie
- 9a, 9b, 9c, 9d: Reststücke

## Patentansprüche

1. Verfahren zur Herstellung von Formkörpern von Katalysatoren, Katalysatorträgern oder Adsorbentien durch Mikroextrusion, bei dem eine pastöse Extrusionsmasse eines Formkörper-Vorläufermaterials durch eine bewegliche Mikroextrusionsdüse extrudiert und durch Bewegung der Mikroextrusionsdüse ein Formkörper-Vorläufer schichtweise aufgebaut wird und der Formkörper-Vorläufer anschließend einer thermischen Behandlung unterworfen wird, **dadurch gekennzeichnet, dass** zum Aufbau jeweils eines Formkörper-Vorläufers die pastöse Extrusionsmasse gleichzeitig durch mehrere Mikroextrusionsdüsen extrudiert wird.

2. Verfahren nach Anspruch 1, **dadurch gekennzeichnet, dass** durch mehrere in einer Reihe in einem Extrusionskopf angeordnete Mikroextrusionsdüsen extrudiert wird.

3. Verfahren nach Anspruch 2, **dadurch gekennzeichnet, dass** zum schichtweisen Aufbau von Formkörper-Vorläufern ein Extrusionskopf horizontal um 90° drehbar ist und in zueinander senkrechten Raumrichtungen bewegt wird.

4. Verfahren nach Anspruch 2, **dadurch gekennzeichnet, dass** der schichtweise Aufbau von Formkörper-Vorläufern durch mindestens zwei Extrusionsköpfe erfolgt, die in zueinander senkrechten Raumrichtungen bewegt werden.

5. Verfahren nach einem der Ansprüche 2 bis 4, **dadurch gekennzeichnet, dass** mehrere Extrusionsköpfe mechanisch gekoppelt und gemeinsam bewegt werden.

6. Verfahren nach einem der Ansprüche 1 bis 5, **dadurch gekennzeichnet, dass** auf einer beweglichen Plattform eine Mehrzahl von Formköper-Vorläufern gleichzeitig erzeugt wird.

7. Verfahren nach Anspruch 6, **dadurch gekennzeichnet, dass** die Plattform kontinuierlich oder diskontinuierlich relativ zu den Mikroextrusionsdüsen bewegt wird.

8. Verfahren nach Anspruch 7, **dadurch gekennzeichnet, dass** die Plattform nach der Erzeugung einer Mehrzahl von Formkörper-Vorläufern diskontinuierlich bewegt wird.

9. Verfahren nach Anspruch 7, **dadurch gekennzeichnet, dass** die Plattform während der Erzeugung der Formkörper-Vorläufer kontinuierlich bewegt wird, wobei die Bewegung der Mikroextrusionsdüsen die Bewegung der Plattform kompensiert.

10. Verfahren nach einem der Ansprüche 6 bis 9, **dadurch gekennzeichnet, dass** die bewegliche Plattform ein umlaufendes Band ist.

11. Verfahren nach Anspruch 10, **dadurch gekennzeichnet, dass** das umlaufende Band ein kontinuierliches Band ist.

12. Verfahren nach Anspruch 10, **dadurch gekennzeichnet, dass** das umlaufende Band einzelne Segmente aufweist.

13. Verfahren nach einem der Ansprüche 6 bis 12, **dadurch gekennzeichnet, dass** auf dem umlaufenden Band die Formkörper-Vorläufer einer Trocknung als thermischer Behandlung unterworfen werden, wobei das Band mindestens eine Trocknungszone durchläuft.

14. Verfahren nach Anspruch 13, **dadurch gekennzeichnet, dass** das umlaufende Band Teil eines Bandtrockners oder Bandkalzinierers ist.

15. Verfahren nach Anspruch 13 oder 14, **dadurch gekennzeichnet, dass** das umlaufende Band Perforationen aufweist und eine Trocknung mittels eines erwärmten Gases, das in der mindestens einen Trocknungszone die Perforationen durchströmt, erfolgt.
